# EUROPEAN PATENT APPLICATION

(11) **EP 4 432 390 A1**
(43) Date of publication of application: **18.09.2024**
(21) Application number: 23746393.0
(22) Date of filing: 28.01.2023
(51) Int. Cl.: H01M 4/131, H01M 10/0525

(54) **POSITIVE ELECTRODE SHEET HAVING HIGH RATE CAPABILITY, LONG CYCLE, AND HIGH SAFETY FOR USE IN LITHIUM BATTERY, AND PREPARATION METHOD THEREFOR AND APPLICATION THEREOF**

(30) Priority: 30.01.2022 CN 202210113791
(71) Applicant: Beijing WeLion New Energy Technology Co., Ltd, Beijing 102402 (CN)
(72) Inventor: QIU, Jiliang, Beijing 102402 (CN); YANG, Qi, Beijing 102402 (CN); WANG, Jiajia, Beijing 102402 (CN); GUO, Luxin, Beijing 102402 (CN); YU, Huigen, Beijing 102402 (CN)
(74) Representative: SSM Sandmair
(86) International application number: PCT/CN2023/073560
(87) International publication number: WO 2023/143516

(57) **Abstract**

Disclosed in the present invention is a positive electrode sheet having high rate capability, long cycle, and high safety for use in a lithium battery, comprising a current collector and a positive electrode material layer located on a surface of the current collector. The positive electrode material layer comprises a first component of at least one selected from Li₁₋ₓ₁Ti₁₋ₓ₁Aₓ₁OPO₄, Li₁₋ₓ₁Ti₁₋ₓ₁Aₓ₁PO₅, Li_{2-y1}Ti_{1-y1}A_{y1}OM1O₄, and Li_{2-y1}Ti_{1-y1}Ay₁M1O₅, wherein 0≤x1≤0.7, 0≤y1≤1, A comprises at least one of Nb, Ta, and Sb, and M1 is at least one of Si and Ge. The positive electrode material layer can further comprise a second component. The first component or a mixed component of the first component and the second component in the positive electrode material layer is dispersed between positive electrode active material particles. The lithium battery comprising the positive electrode shows excellent rate capability, cycle performance, and safety. The present invention does not change the main preparation process of the current positive electrode sheet, a separator, and a battery, is compatible with the main preparation process of the positive electrode sheet of an existing lithium ion battery, and is suitable for large-scale application.

## Description

### FIELD

The present disclosure relates to the technical field of lithium batteries, in particular to a positive electrode sheet having high rate capability, long cycle, and high safety for use in lithium batteries, and preparation method therefor and application thereof.

### BACKGROUND

The lithium-ion battery has advantages such as high energy density, desirable cycle performance, long service life, low self-discharge, and no memory effect, it has gradually occupied a larger application market in the aspects of energy storage, power battery, and 3C electronics, thus it exhibits a widespread prospect.

Lithium batteries have been continuously developed in the direction of improving energy density, to provide better endurance for electric vehicles, digital products, and other power electronic products. The method for improving the loading capacity and the compaction density of the electrode pole piece, particularly the loading capacity and the compaction density of the positive electrode sheet, is an effective method for increasing the energy density of the battery. However, with the increase of the loading capacity and the compaction density of the positive electrode sheet, the positive electrode active material layer is thickened and the porosity is reduced, so that the lithium ions are difficult to transmit in the positive electrode sheet, the polarization of the battery is serious, the discharge specific capacity and the rate capability of the battery are reduced, and the cycling stability is also degraded. Meanwhile, when the energy density of the battery is improved, the safety performance of the battery can hardly be ensured. There has not been a technology to solve all the above problems.

The existing methods for improving the rate capability of the battery comprising:

Doping the positive electrode surface: CN113224287A discloses a strontium-doped ternary lithium-ion battery positive electrode material and a preparation method and use thereof (Li₁₋ₓSrₓ[Ni_{1-y-z}Co_{y}M_{z}]O₂, wherein M is one of metal Mn and Al, 0<x≤0.1, 0< y≤1, 0<z≤1). The lithium sites are replaced by doping strontium metal ions so that the cation mixing degree is reduced, a lithium-ion channel is expanded, a layered structure is stabilized, and the rate capability of the lithium battery is effectively improved. While the method increases the rate capability, it often provides the material with the problem of accelerated attenuation of capacity.

The existing methods for improving the safety performance of the battery comprising:
Coating the positive electrode: CN113809280A discloses a positive electrode material and preparation and use thereof, the positive electrode material with an approximate planar coating effect is prepared by changing a sintering technical means and applying interaction between coating agents. The coverage range of the surface coating layer of the positive electrode material prepared with the method is relatively large, the erosion degree of electrolyte to material particles is remarkably reduced, and the probability of side reaction is effectively reduced, thus the safety performance of the material is improved. The disadvantages are that the method has a complex process and influences the rate capability of the battery.

Use of electrolyte additives: CN113690490A discloses a phosphite lithium-ion battery electrolyte additive, which can effectively prevent the combustion or explosion of an organic solvent, improve the thermal stability of the electrolyte, increase the stability of the positive electrode, and improve the stability and safety of battery circulation. The disadvantages involve impairing the electrical properties of the batteries, such as cycle performance and rate capability.

Coating glue on the separator: CN108963153B discloses a lithium-ion battery separator and a preparation method thereof, the preparation method comprises coating an aqueous ceramic slurry on at least one side surface of the base film layer, then coating a composite adhesive layer coating composed of polyethylene glycol and polymethyl methacrylate on the surface of the aqueous ceramic slurry coating and/or the base film layer. The lithium-ion battery separator prepared by the present disclosure has desirable bonding performance, can prevent short circuit from dislocation of pole pieces, and improves the battery hardness, thereby greatly improving the safety performance of the battery. The disadvantages reside in that the rate capability of the battery is damaged.

The existing methods for simultaneously improving the electrical performance and safety performance of the battery comprising:

CN108365260B discloses a quasi-solid electrolyte prepared from the raw materials including a polymer, a ceramic electrolyte, lithium salt, and an ionic liquid. The ceramic electrolyte is prepared from a principal-phase lithium titanium aluminum phosphate and impurity-phase TiP₂O₇/TiO₂. Preferably, the ceramic electrolyte contains 2-7% of impurity-phase, and the mass ratio of TiP₂O₇ to TiOz is 1.5-2.5: 1. The quasi-solid electrolyte prepared by using the ceramic electrolyte with the impurity-phase content has the optimal comprehensive performance. The impurity phase with special composition and the content has the lithium storage characteristic so that the transmission performance of lithium ions can be improved, the contact between the principal-phase lithium titanium aluminum phosphate and metal lithium can be reduced, and the interface stability with the metal lithium is improved. However, the electrical performance and safety performance of the positive electrode are not improved in the patent, and the method is incompatible with the mainstream preparation process of the positive electrode sheet of the lithium-ion battery in the existing art, and cannot be suitable for large-scale use.

CN113707880A relates to a positive electrode sheet containing solid electrolyte, and a preparation method and use thereof, aiming at improving the rate capability, cycle performance, and safety performance of the battery. Given that the solid electrolyte contained in the positive electrode slurry is beneficial to the transverse and longitudinal transmission and infiltration of the electrolyte in the pole piece, is beneficial to the storage and infiltration of the electrolyte, and is conducive to alleviating the expansion of the pole piece during the circulation process of the battery cell, reducing the pressed and extruded amount of the electrolyte in the expansion process of the pole piece, such that the battery cell still contains rich electrolyte in the pole piece after long-term circulation, the normal transmission of lithium ions is ensured, and thus the cycle performance can be improved. However, as illustrated by the data of the examples, the battery capacity and the safety performance are only slightly improved, and the effect on the improvement of rate capability lacks data support, as can be seen, the purpose of comprehensively improving the electrical performance and safety of battery cannot be fulfilled by adding the conventional solid electrolyte.

As a result, there is still a need to search for a method with simple steps and cost advantages, while improving the electrical properties and safety performance of the battery.

### SUMMARY

Aiming at the limitations in the existing art, the present disclosure provides a positive electrode sheet having high rate capability, long cycle, and high safety for use in lithium battery, and a preparation method therefor and application thereof. The positive electrode sheet of the present disclosure comprises a current collector and a positive electrode material layer disposed on the surface of the current collector, wherein the positive electrode material layer comprises a positive electrode active material, a conductive agent, a binder, and a first component.

The first component comprises at least one selected from the group consisting of Li₁₋ₓ₁Ti₁₋ₓ₁Aₓ₁OPO₄, Li₁₋ₓ₁Ti₁₋ₓ₁Aₓ₁PO₅, Li_{2-y1}Ti_{1-y1}A_{y1}OM1O₄, and Li_{2-y1}Ti_{1-y1}A_{y1}M1O₅, wherein 0≤x1≤0.7, 0≤y1≤1, A is at least one selected from the group consisting of Nb, Ta, and Sb, and M1 is at least one of Si and Ge.

Preferably, the first component is at least one selected from the group consisting of LiTiOPO₄, Li_{0.9}Nb_{0.1}Ti_{0.9}OPO₄, Li_{0.9}Ta_{0.1}Ti_{0.9}OPO₄, Li₂TiOSiO₄, and LiTaOGeO₄.

The positive electrode material layer further comprises a second component selected from the group consisting of LiM2₂(PO₄)₃, Li₁₊ₓ₂Alₓ₂M2₂₋ₓ₂(PO₄)₃, M2O₂, Li_{16-4y2}M2_{y2}O₈, M2P₂O₇, M3PO₄, M3₂SiO₅, M4₃(PO₄)₂, and M4₂SiO₄, wherein M2 is selected from one of Ti, Ge, Zr, and Hf, wherein 0<x2<0.6, and M3 and M4 are respectively one selected from the group consisting of Al, Ga, Sc, Y, Ca, Sr, Zn, Si, In, Lu, La, Fe, Cr and Ge, and 3<y2<4.

The second component is preferably one selected from the group consisting of InPO₄, LATP, AlPO₄, LAGP, LATP+AlPO₄, LAGP+Al₂SiO₅, InPO₄ +LATP, Al₂SiO₅, TiO₂ +LiTi₂(PO4)₃, TiP₂O₇+LiGe₂(PO4)₃.

The form of a mixed component of the first component and second component may be the uniform mixture of the first component particle and second component particle, or each primary particle contains a first component crystal form and a second component crystal form.

The mass ratio of the first component to the positive electrode active material in the positive electrode active material layer is denoted as w₁, wherein 0<w₁<5%, and preferably 0.1%<w₁<3%.

The mass ratio of the second component to the positive electrode active material in the positive electrode material layer is denoted as w₂, wherein 0≤w₂<5%, and preferably 0≤w₂<3%.

The particle size of the first component is within the range from 10nm to 10µm, preferably within the range from 50nm to 500nm.

The particle size of the second component is within the range from 10nm to 10µm, preferably within the range from 50nm to 500nm.

Preferably, based on the weight of the positive electrode material layer being 100%,
the positive electrode active material particles are contained in an amount of 80-99wt%;
the conductive agent is contained in an amount of 0.1-8wt%;
the binder is contained in an amount of 0.1-10wt%;
the first component or the mixed component consisting of the first component and the second component is contained in an amount of 0.1-6wt%;

Preferably, the particles of the positive electrode active material are at least one selected from the group consisting of a lithium cobaltate positive electrode and a modified material thereof, an NCM ternary positive electrode and a modified material thereof, an NCA ternary positive electrode and a modified material thereof, a lithium nickel manganate positive electrode and a modified material thereof, a lithium-rich positive electrode and a modified material thereof, and a lithium iron phosphate positive electrode and a modified material thereof.

The conductive agent is at least one selected from the group consisting of Super-P, KS-6, carbon black, carbon nanofiber, carbon nanotube, acetylene black, or graphene;

The binder is selected from the group consisting of polyvinylidene fluoride, polyvinylidene fluoride-hexafluoropropylene, polytetrafluoroethylene, homopolymers, copolymers, modified compounds of the polymers, or a mixture of the polymers and other polymers or small molecules.

The second object of the present disclosure is to provide a method for preparing a positive electrode sheet for use in a lithium battery, wherein a first component or a mixed component of the first component and a second component is blended into the positive electrode slurry during the slurry homogenization process. During the preparation of the positive electrode sheet, a first component or a mixed component of the first component and a second component is added and dispersed among the positive electrode active material particles.

Preferably, the method comprises the following steps:
Step 1: uniformly mixing the first component or the mixed component of the first component and the second component, a positive electrode active material, a conductive additive, a binder and a solvent to form a slurry;
Step 2: coating the slurry obtained in Step 1 on the surface of an aluminum current collector to form a positive electrode sheet;
Step 3: subjecting the positive electrode sheet obtained in Step 2 to a blast drying, and a vacuum drying to prepare the final positive electrode sheet.

Preferably,
In Step 1, the solvent in the slurry is NMP, and a mass ratio of the NMP to the positive electrode material is (2,000-10): 100.

In Step 2,
the prepared slurry has a viscosity value within the range of 3,500-8,500 mPa·S at 25°C.

In Step 3,
the temperature of the blast drying is within the range of 80-180°C, and the time is from 10 minutes to 9 hours; the temperature of the vacuum drying is within the range of 80-180°C, and the time is within the range of 3-100 hours.

The third object of the present disclosure is to provide a method of using the positive electrode sheet according to the first object of the present disclosure in the lithium battery.

According to the present disclosure, a first component or a mixed component of the first component and the second component having a particle diameter D50 of 0.01-10µm, a conductive agent, and a binder are added into the positive electrode sheet, so that the rate capability, the cycle performance and the safety performance of the battery are improved, and the battery has the characteristics of high rate capability, long cycle, and high safety. In the existing knowledge, the first component in the present disclosure is usually an impurity phase generated in the sintering process of the solid electrolyte, the existence of the impurity phase generally reduces the ionic conductance of the solid electrolyte and usually needs to be removed when the solid electrolyte is prepared, the first component will not be voluntarily introduced into the electrolyte in the existing art during the process of producing the lithium battery with high safety and high rate capability. However, the present inventors have discovered in a large number of experiments that the properties of the first component and the solid electrolyte are completely different, the ionic conductivity of the component is lower, which is far smaller than the ionic conductivity about 10⁻⁴ S/cm of the common solid electrolyte (that is, the component cannot be replaced by the solid electrolyte and added into an electrode material), and is further smaller than the ionic conductivity about 10⁻² S/cm of an electrolyte solution, the first component cannot directly contribute to the ionic conduction capability after being mixed with the electrolyte solution, but the specific chemical composition of the first component can participate in the formation of CEI on the surface of the positive electrode material when the first component is added into the positive electrode material, so that the CEI composition is modified to be more stable, the rupture of the CEI and the resultant polarization and thermal runaway of the battery are avoided, thus the rate capability, the cycle performance, and safety of the positive electrode sheet can be improved in the actual operation of the battery; the present inventors have further found when the second component is added into the mixed positive electrode, it can inhibit the decomposition of the electrolyte solution and the generation of an insulating component on the surface of the positive electrode material, that is, when the second component and the first component are used simultaneously, the components can produce the synergy, so that the CEI having advantages is constructed, the electrical property and safety performance of battery are improved comprehensively. Moreover, a first component or a mixed component of the first component and the second component are introduced into the positive electrode in a blending mode, the current mainstream preparation process of the positive electrode sheet, separator, and battery may not be changed, and the lithium battery has the advantages of high stability and low costs, thus it is suitable for large-scale use.

Compared with the existing art, the present disclosure has the following advantages and prominent effects:
The particles of a first component or a mixed component of the first component and the second component added into the lithium battery positive electrode sheet have high chemical stability, can be directly blended in the positive electrode active material before the positive electrode sheet is prepared, and do not change the current mainstream preparation process of the positive electrode sheet, separator, and battery, and are compatible with the mainstream preparation process of the lithium-ion battery positive electrode sheet in the existing art, do not affect the preparation process of a positive electrode and a battery cell, have the advantages of high stability and low costs, and are suitable for large-scale use. In contrast, the methods of doping the positive electrode material or coating the positive electrode surface all need to change the existing positive electrode material preparation technology, both the specific discharge capacity and the rate capability cannot be improved simultaneously.

The first component added in the lithium battery positive electrode sheet of the present disclosure is completely different from the existing solid electrolyte, and the lithium-ion conduction capability of the first component is not strong so the first component is completely unsuitable for the solid electrolyte material. To improve the electrical properties of the battery, an additive component with high lithium ion conductivity is generally selected in the existing art. However, when a first component with low lithium ion conductivity is creatively added into the positive electrode, the rate capability, cycle performance and safety performance of the battery can be significantly enhanced by improving the surface CEI of the positive electrode particles, and the existing technical prejudice is overcome. The particles of a first component or a mixed component of the first component and the second component simultaneously added into the lithium battery positive electrode sheet can improve the stability of the CEI on the surface of the positive electrode particles, inhibit the oxygen gas release of the positive electrode and the reaction with the electrolyte solution during thermal runaway, and suppress the decomposition of the electrolyte, thereby improving the electrical property and safety performance of the battery; it is demonstrated by the experiments prove that the synergistic effect is better when the first component and the second component are used simultaneously.

The content of the particles of a first component or a mixed component particles of the first component and the second component added in the lithium battery positive electrode sheet is specially designed, if the content is less than 0.1wt%, it is difficult to form an effective CEI layer, the electrical property and safety performance of the battery cannot be significantly improved. If the content is larger than 6wt%, the content of inactive materials in the battery increases, which may decrease the energy density of the battery. As a result, the prepared positive electrode exhibits excellent rate capability, cycle performance, and safety.

### BRIEF DESCRIPTION OF THE DRAWINGS

FIG. 1 is a schematic structural view of a lithium battery positive electrode sheet in Example 2;
FIG. 2 is a schematic structural view of a lithium battery positive electrode sheet in Example 1;
FIG. 3 illustrates a schematic view of the heavy object impact test tool of the lithium battery in the present disclosure;
FIG. 4 is a schematic structural view of a lithium battery positive electrode sheet in Example 11.

### DETAILED DESCRIPTION

The present disclosure will be described in detail below with reference to the appended drawings and examples, it should be indicated that the following examples merely serve to further illustrate the present disclosure, and should not be construed as limiting the protection scope of the present disclosure, the non-essential improvements and modifications on the present disclosure made by those skilled in the art based on the content thereof still fall into the protection scopes of the present disclosure.

### Example 1

Step 1: 1kg of a mixed component consisting of a first component LiTiOPO₄ and a second component Li_{1.4}Al_{0.4}Ti_{1.6}(PO₄)₃, 100kg of a positive electrode active material NCM90, 1kg of Super P, 1kg of PVDF (Polyvinylidene Fluoride) and 500kg of NMP (N-methyl pyrrolidone) solvent were uniformly blended to form a slurry;
Step 2: the slurry obtained in Step 1 was coated on the surface of an aluminum current collector to form a positive electrode sheet;
Step 3: the sheet obtained in Step 2 was subjected to baking at 95°C for 5min, subjected to rolling under 28T, and die-cutting to obtain a positive electrode sheet with a thickness of 126µm, the positive electrode sheet was subjected to vacuum drying at 105°C for 24 hours to obtain the final positive electrode sheet.

The content ratio of the first component to the second component was 1:4, and the particle diameters D50 of the first component and the second component were 200nm respectively.

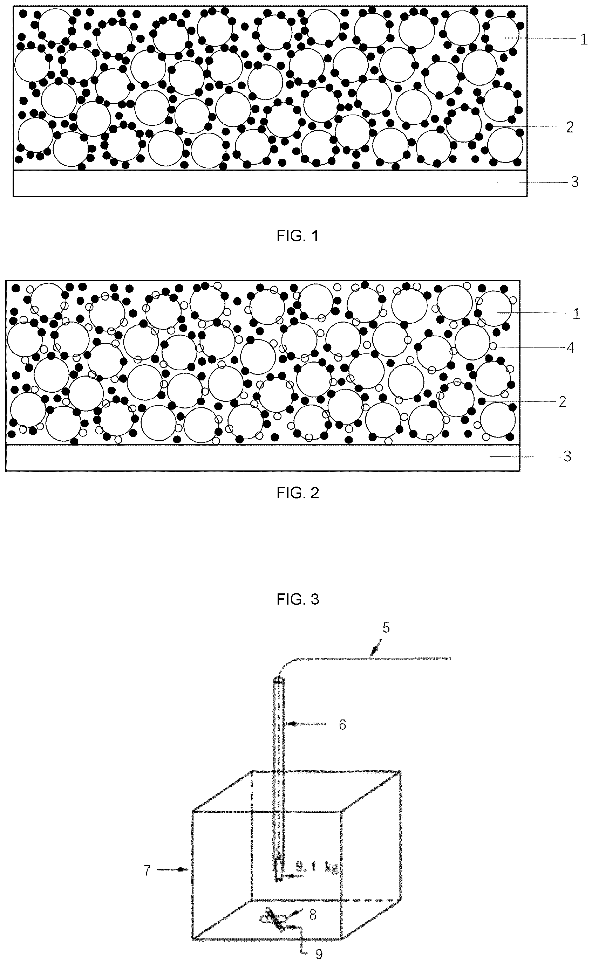

The schematic structural view of the positive electrode sheet for lithium battery prepared with the above method was shown in FIG. 2, wherein the positive electrode sheet included a positive electrode material layer and a current collector 3; wherein the positive electrode material layer comprised a positive electrode active material 1, a conductive agent, a binder, a first component 2, and a second component 4, and the first component 2 and the second component 4 in the positive electrode material layer were dispersed among the particles of the positive electrode active material 1. The positive electrode sheet and the SiOC650 negative electrode were matched and assembled to form a pouch lithium battery, the prepared lithium battery was subjected to the process steps of electrolyte injection, formation, and capacity grading, and then subjected to the electrochemical test and safety performance test. The specific electrochemical performance test results were shown in Table 1, and the safety performance test results were illustrated in Table 2.

The method for the electrochemical performance test of the lithium battery used in the application document comprised the following steps:

### 1. Cycle performance test

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was discharged at a constant current of 1C until the discharge termination voltage was reached, the discharging was stopped, and the discharge capacity was recorded; so that a cycle of charging and discharging was completed;
c) The steps a) and b) were repeated until the discharge capacity was lower than 80% of the first cycle discharge capacity, and the total cycle number of the battery charging and discharging at the moment was recorded.

### 2. Rate capability test

a) The battery was charged at the multiplier currents of 0.1C, 0.2C, 0.33C, 1C, 2C, and 3C at a temperature of 23°C±2°C respectively until the charging termination voltage was reached, the battery was then discharged at the same multiplier current until the discharge termination voltage was reached, and the battery was subjected to 4 discharging and discharging cycles at the same multiplier current respectively;
b) The discharge capacity conditions with different multiplier currents were recorded;
c) The ratio of the 2C or 3C discharge capacity to the 0.33C discharge capacity was calculated and denoted as 2C/0.33C or 3C/0.33C, the rate capability was evaluated.

### 3. High-temperature cycle

a) The battery was charged at a constant current of 1C at a temperature of 45°C until a charging termination voltage was reached, the charging mode was then transferred to the constant voltage charging until the charging current multiplier was decreased to 0.05C, the charging was stopped;
b) The lithium battery was subjected to standing still at a temperature of 45°C for 5 h;
c) The battery was discharged at a constant current of 1C under the high-temperature condition of 45°C until the discharge termination voltage was reached, the discharging was stopped, and the discharge capacity was recorded; so that a cycle of charging and discharging was completed;
d) The steps a) to c) were repeated until the discharge capacity was lower than 80% of the first cycle discharge capacity, the discharge capacity of the battery, and the total cycle number of the battery charging and discharging at the moment were recorded.

The lithium-ion battery safety performance testing method comprised the following items:

### 1. Overcharge

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was continuously discharged at a constant current of 1C until the thermal runaway of the battery occurred, the voltage value of the battery when the thermal runaway began to occur was recorded.

### 2. Hotbox

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was placed in a test chamber. The test chamber was heated at a temperature rise rate of 5°C/min, the temperature was kept constant for 1h after the temperature in the test chamber reached 160°C +/-2°C;

The battery passed through the test if the smoking, outbreak of a fire, or explosion did not occur, otherwise the battery did not pass through the test.

### 3. Falling down

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was subjected to a free fall on a concrete plate according to a drop height of 1 m;

Each surface of the pouch battery fell once, and a total of six tests were carried out;
After six tests, the battery passed through the test if the smoking, outbreak of a fire, or explosion did not occur, otherwise the battery did not pass through the test.

### 4. Impact of a heavy object

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) Battery 8 was placed on a platform surface, a metal rod 9 with a diameter of 15.8mm±0.2mm was transversely disposed on the upper surface of a geometric center of the battery, the battery surface with the metal rod was impacted by a heavy object with the mass of 9.1kg±0.1kg in a free falling state from a height of 610mm±25mm, and observed for 6h, wherein a schematic view of the heavy object impact test tool was illustrated in FIG. 3, wherein 5 represented a traction rope, 6 represented a guide pipe, and 7 denoted an iron and steel impact box (a hinged door was not shown).

Only the wide surface of the pouch battery was subjected to the impact test, thus each sample was subjected to only one impact test;
The battery passed through the test if the smoking, outbreak of a fire, or explosion did not occur, otherwise the battery did not pass through the test.

### 5. Acupuncture

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was penetrated by a high-temperature-resistant steel needle having a diameter ϕ of 8mm (the conical angle of the pinpoint was 45°, the surface of the needle was smooth and had no rust, oxide layer, and oil stain) at the speed of 25 mm/s from the direction vertical to a battery polar plate, wherein the penetration position was the geometric center of the penetrated surface, and the steel needle was retained in the storage battery;
c) The battery was observed for 1 h;

The battery passed through the test if the smoking, outbreak of a fire, or explosion did not occur, otherwise the battery did not pass through the test.

### Example 2

1kg of a mixed component consisting of a first component and a second component was replaced with the component containing only 1kg of the first component without the second component, the positive electrode active material was replaced with NCM83, the battery structure was NCM83∥SiOC650, and the other parameters were the same as those in Example 1; the schematic structural view of the prepared lithium battery positive electrode sheet was shown in FIG. 1, the positive electrode sheet included a positive electrode material layer and a current collector 3, wherein the positive electrode material layer comprised a positive electrode active material 1, a conductive agent, a binder, and a first component 2, and the first component 2 in the positive electrode material layer was dispersed among particles of the positive electrode active material 1. The prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 3

The second component was replaced with AlPO₄, the negative electrode was replaced with SiOC450, the battery structure was NCM83∥SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 4

The second component was replaced by Li_{1.4}Al_{0.4}Ti_{1.6}(PO₄)₃ and AlPO₄, and the mass ratio of the first component to Li_{1.4}Al_{0.4}Ti_{1.6}(PO₄)₃ and AlPO₄ in the second component was 1:8:1, the positive electrode active material was replaced by LCO, the negative electrode was replaced by SiOC450, the battery structure was LCO∥SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 5

1kg of the mixed component consisting of the first component and second component was replaced with the component containing only 1kg of the first component LiTaOSiO₄ without the second component, the positive electrode active material was replaced with LFP, the negative electrode was replaced with graphite, the battery structure was graphite∥LFP, and the other parameters were the same as in Example 1; and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 6

The first component was replaced with LiTaOGeO₄, the second component was replaced with Li_{1.4}Al_{0.4}Ge_{1.6}(PO₄)₃, the positive electrode active material was replaced with NCM83, the negative electrode was replaced with graphite, the battery structure was graphite∥NCM83, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 7

1kg of the mixed component consisting of the first component and the second component was replaced with the component containing only 1kg of the first component LiTaOSiO₄ without the second component, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 8

The first component was replaced with LiTaOGeO₄, the second component was replaced with Al₂SiO₅, the positive electrode active material was replaced with NCM83, the battery structure was NCM83∥SiOC650, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 9

The second component was replaced by Li_{1.4}Al_{0.4}Ti_{1.6}(PO₄)₃ and AlPO₄, the mass ratio of first component to Li_{1.4}Al_{0.4}Ti_{1.6}(PO₄)₃ and AlPO₄ in the second component was 1:8:1, the particle diameter D50 of the particles in the first component and the second component was replaced with 50nm, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 10

The second component was replaced by Li_{1.4}Al_{0.4}Ti_{1.6}(PO₄)₃ and AlPO₄, the mass ratio of first component to Li_{1.4}Al_{0.4}Ti_{1.6}(PO₄)₃ and AlPO₄ in the second component was 1:8:1, the particle diameter D50 of the particles in the first component and the second component was replaced with 500nm, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 11

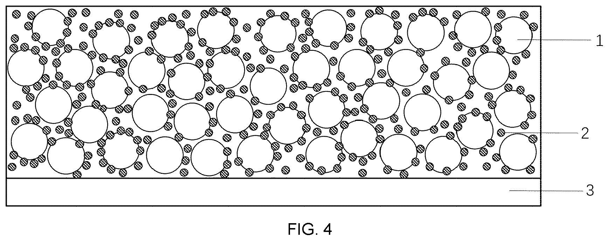

The total weight of a mixed component consisting of the first component and the second component was replaced by 0.5kg, the second component was replaced by Li_{1.4}Al_{0.4}Ti_{1.6}(PO₄)₃ and AlPO₄, the mass ratio of the first component to Li_{1.4}Al_{0.4}Ti_{1.6}(PO₄)₃ and AlPO₄ in the second component was 1:8:1, each primary particle of the mixed component included the particles of a first component crystal form and a second component crystal form, the particle diameter D50 of the primary particles in the mixed component was 200nm, and the form of the mixed component consisting of first component and the second component was shown in FIG. 4, wherein 1 represented an active material, 2 represented a mixed component of a first component and a second component in the same particle, 3 represented a current collector, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 12

The total weight of a mixed component consisting of the first component and the second component was replaced by 5kg, the second component was replaced by Li_{1.4}Al_{0.4}Ti_{1.6}(PO₄)₃ and AlPO₄, the mass ratio of the first component to Li_{1.4}Al_{0.4}Ti_{1.6}(PO₄)₃ and AlPO₄ in the second component was replaced by 1:8:1, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 1

The first component and the second component were not used, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 2

The first component and the second component were not used, the positive electrode active material was replaced with NCM83, the battery structure was NCM83∥SiOC650, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 3

The first component and the second component were not used, the positive electrode active material was replaced with NCM83, the negative electrode was SiOC450, the battery structure was NCM83∥SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 4

The first component and the second component were not used, the positive electrode active material was replaced with LCO, the negative electrode was SiOC450, the battery structure was LCO∥SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 5

The first component and the second component were not used, the positive electrode active material was replaced with LFP, the negative electrode was graphite, the battery structure was LFPllgraphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 6

The first component and the second component were not used, the positive electrode active material was replaced with NCM83, the negative electrode was graphite, the battery structure was NCM83∥graphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 7

1kg of the mixed component consisting of the first component and the second component was replaced with 1kg of Al₂O₃, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 8

1kg of the mixed component consisting of the first component and the second component was replaced with 1kg of ZnO, the positive electrode active material was replaced with NCM83, the battery structure was NCM83∥SiOC650, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 9

1kg of the mixed component consisting of the first component and the second component was replaced with 1kg of Li_{1.4}Al_{0.4}Ti_{1.6}(PO₄)₃, the positive electrode active material was replaced with NCM83, the negative electrode was replaced with SiOC450, the battery structure was NCM83∥SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 10

1kg of the mixed component consisting of the first component and the second component was replaced with 1kg of AlPO₄, the positive electrode active material was replaced with LCO, the negative electrode was replaced with SiOC450, the battery structure was LCO∥SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 11

1kg of the mixed component consisting of first component and second component was replaced with 1kg of Li_{0.5}La_{0.5}TiO₃, without the second component, the positive electrode active material was replaced with LFP, the negative electrode was replaced with graphite, the battery structure was LFP∥graphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 12

1kg of the mixed component consisting of first component and second component was replaced with 1kg of Li₇La₃Zr₂O₁₂, the positive electrode active material was replaced with NCM83, the negative electrode was replaced with graphite, the battery structure was NCM83∥graphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

The electrochemical performance data for the Examples and Comparative Examples were shown in Table 1.

**Table 1**

| | Battery capacity | Battery energy density | Cycles at room temperature (80%) | Multiplying power at room temperature | Cycles at 45°C (80%) |
|---|---|---|---|---|---|
| Example 1 | 100Ah | 365Wh/kg | 1695 | 2C/0.33C=80% | 1121 |
| Example 2 | 80Ah | 330Wh/kg | 1589 | 3C/0.33C=86% | 1123 |
| Example 3 | 100Ah | 310Wh/kg | 1925 | 3C/0.33C=88% | 1424 |
| Example 4 | 30Ah | 290Wh/kg | 2457 | 3C/0.33C=92% | 1823 |
| Example 5 | 50Ah | 155Wh/kg | 8844 | 3C/0.33C=93% | 5759 |
| Example 6 | 78Ah | 280Wh/kg | 3261 | 3C/0.33C=89% | 2184 |
| Example 7 | 100Ah | 365Wh/kg | 1361 | 2C/0.33C=75% | 904 |
| Example 8 | 80Ah | 330Wh/kg | 1891 | 3C/0.33C=87% | 1401 |
| Example 9 | 100Ah | 365Wh/kg | 1481 | 2C/0.33C=76% | 1027 |
| Example 10 | 100Ah | 365Wh/kg | 1479 | 2C/0.33C=78% | 1064 |
| Example 11 | 100Ah | 365Wh/kg | 1357 | 2C/0.33C=77% | 898 |
| Example 12 | 100Ah | 360Wh/kg | 1489 | 2C/0.33C=77% | 1001 |
| Comparative Example 1 | 100Ah | 365Wh/kg | 715 | 2C/0.33C=60% | 427 |
| Comparative Example 2 | 80Ah | 330Wh/kg | 1026 | 3C/0.33C=78% | 673 |
| Comparative Example 3 | 100Ah | 310Wh/kg | 1220 | 3C/0.33C=80% | 818 |
| Comparative Example 4 | 30Ah | 290Wh/kg | 1610 | 3C/0.33C=83% | 1080 |
| Comparative Example 5 | 50Ah | 155Wh/kg | 5799 | 3C/0.33C=92% | 3802 |
| Comparative Example 6 | 78Ah | 280Wh/kg | 2145 | 3C/0.33C=82% | 1456 |
| Comparative Example 7 | 100Ah | 360Wh/kg | 827 | 2C/0.33C=61% | 511 |
| Comparative Example 8 | 80Ah | 325Wh/kg | 1097 | 3C/0.33C=79% | 711 |
| Comparative Example 9 | 100Ah | 308Wh/kg | 1301 | 3C/0.33C=81% | 905 |
| Comparative Example 10 | 30Ah | 286Wh/kg | 1714 | 3C/0.33C=84% | 1102 |
| Comparative Example 11 | 50Ah | 155Wh/kg | 5942 | 3C/0.33C=92% | 3911 |
| Comparative Example 12 | 78Ah | 280Wh/kg | 2399 | 3C/0.33C=83% | 1503 |

The safety performance data for the Examples and Comparative Examples were shown in Table 2.

**Table 2**

| | The pass rate of hot box | The pass rate of a heavy object impact | The pass rate of falling down | The pass rate of acupuncture | Overcharge voltage |
|---|---|---|---|---|---|
| Example 1 | 2/5 | 3/5 | 5/5 | 3/5 | 5.5V |
| Example 2 | 2/5 | 4/5 | 5/5 | 3/5 | 5.7V |
| Example 3 | 3/5 | 4/5 | 5/5 | 4/5 | 5.7V |
| Example 4 | 4/5 | 4/5 | 5/5 | 5/5 | 7.3V |
| Example 5 | 5/5 | 5/5 | 5/5 | 5/5 | 32V |
| Example 6 | 4/5 | 5/5 | 5/5 | 4/5 | 7.7V |
| Example 7 | 2/5 | 3/5 | 5/5 | 3/5 | 5.3V |
| Example 8 | 2/5 | 4/5 | 5/5 | 3/5 | 5.8V |
| Example 9 | 2/5 | 3/5 | 5/5 | 3/5 | 5.5V |
| Example 10 | 2/5 | 3/5 | 5/5 | 3/5 | 5.5V |
| Example 11 | 1/5 | 3/5 | 5/5 | 3/5 | 5.4V |
| Example 12 | 2/5 | 3/5 | 5/5 | 3/5 | 5.5V |
| Comparative Example 1 | 0/5 | 0/5 | 0/5 | 0/5 | 4.5V |
| Comparative Example 2 | 0/5 | 0/5 | 0/5 | 0/5 | 4.6V |
| Comparative Example 3 | 1/5 | 0/5 | 0/5 | 0/5 | 4.7V |
| Comparative Example 4 | 2/5 | 0/5 | 2/5 | 2/5 | 5.5V |
| Comparative Example 5 | 2/5 | 1/5 | 4/5 | 4/5 | 18V |
| Comparative Example 6 | 2/5 | 0/5 | 1/5 | 1/5 | 6.0V |
| Comparative Example 7 | 1/5 | 0/5 | 0/5 | 0/5 | 4.6V |
| Comparative Example 8 | 1/5 | 0/5 | 0/5 | 0/5 | 4.7V |
| Comparative Example 9 | 2/5 | 0/5 | 0/5 | 0/5 | 4.8V |
| Comparative Example 10 | 2/5 | 1/5 | 3/5 | 2/5 | 5.7V |
| Comparative Example 11 | 3/5 | 2/5 | 4/5 | 4/5 | 19V |
| Comparative Example 12 | 2/5 | 1/5 | 2/5 | 1/5 | 6.2V |

As can be seen from the data in Table 1 and Table 2, the rate capability, cycle performance, and safety performance of the battery can be significantly improved by blending a first component or a mixed component of the first component and the second component in the positive electrode. It is illustrated by a comparison of Example 5 and Comparative Example 11, the effect of improving the rate capability, cycle performance, and safety performance of the battery by blending the first component in the positive electrode is much stronger than blending the solid electrolyte having a high lithium ion conduction in the positive electrode, the reason resides in that constructing a high-efficiency CEI is vital for improving the electrical properties and safety performance of the liquid state battery and the solid-liquid mixed battery. It is indicated from the comparison between Example 1 and Example 7 that blending a mixed component of the first component and the second component can further improve the rate capability, cycle performance, and safety performance of the battery based on the effect of only blending the first component, the reason may be that the first component and second component can exert a synergistic effect to improve the CEI. The comparison results between Example 1 and Examples 9 and 10 indicate that the first component and the second component have the optimum particle diameters, the optimization of the particle diameters of the first component and the second component can improve the rate capability and the cycle performance of the battery; if the particle size is too small, the particles of a first component or a mixed component of the first component and the second component are prone to agglomerate; if the particle diameter is too large, the particles of a first component or a mixed component of the first component and the second component cannot have a sufficient contacted with the surface of the active material particles, thus the too large or small particle diameter is not conducive to the construction of stable CEI. As demonstrated by the comparison between Example 1 and Comparative Examples 11 and 12, there is an optimum ratio of the addition amounts of the first component and the second component, an excessively low addition amount cannot improve the rate capability and safety performance of the battery, an excessively high addition amount is not conducive to the exertion of a higher rate capability, the reason may be that when the addition amount of a first component or a mixed component of the first component and the second component is too high, the particles accumulate to form the regions with low lithium ion conductivity.

## Claims

1. A lithium battery positive electrode sheet comprising a positive electrode material layer, the positive electrode material layer comprises a positive electrode active material, a conductive agent, a binder and a first component,
wherein the first component is at least one selected from the group consisting of Li₁₋ₓ₁Ti₁₋ₓ₁Aₓ₁OPO₄, Li₁₋ₓ₁Ti₁₋ₓ₁Aₓ₁PO₅, Li_{2-y1}Ti_{1-y1}A_{y1}OM1O₄, and Li_{2-y1}Ti_{1-y1}A_{y1}M1O₅, wherein 0≤x1≤0.7, 0 ≤y1≤1, A is at least one selected from the group consisting of Nb, Ta, and Sb, and M 1 is at least one of Si and Ge;
the first component is preferably at least one selected from the group consisting of LiTiOPO₄, Li_{0.9}Nb_{0.1}Ti_{0.9}OPO₄, Li_{0.9}Ta_{0.1}Ti_{0.9}OPO₄, Li₂TiOSiO₄, and LiTaOGeO₄.

2. The lithium battery positive electrode sheet of claim 1, wherein the positive electrode material layer further comprises a second component, the second component is at least one selected from the group consisting of LiM2₂(PO₄)₃, Li₁₊ₓ₂Alₓ₂M2₂₋ₓ₂(PO₄)₃, M2O₂, Li_{16-4y2}M2_{y2}O₈, M2P₂O₇, M3PO₄, M3₂SiO₅, M4₃(PO₄)₂, and M4₂SiO₄, wherein M2 is selected from one of Ti, Ge, Zr, and Hf, wherein 0<x2<0.6, and M3 and M4 are respectively one selected from the group consisting of Al, Ga, Sc, Y, Ca, Sr, Zn, Si, In, Lu, La, Fe, Cr, and Ge, and 3<y2<4;
the second component is preferably one selected from the group consisting of InPO₄, LATP, AlPO₄, LAGP, LATP + AlPO₄, LAGP + Al₂SiO₅, InPO₄ + LATP, Al₂SiO₅, TiO₂ + LiTi₂(PO4)₃, TiP₂O₇ + LiGe₂(PO4)₃.

3. The lithium battery positive electrode sheet of claim 1, wherein the form of a mixed component of first component and second component may be the uniform mixture of the first component particle and second component particle, or each primary particle contains a first component crystal form and a second component crystal form.

4. The lithium battery positive electrode sheet of claim 1, wherein a mass ratio of the first component to the positive electrode active material in the positive electrode active material layer is denoted as w₁, wherein 0<w₁<5%, and preferably 0.1%<w₁<3%; the particle size of the first component is within the range from 10nm to 10µm, preferably within the range from 50nm to 500nm.

5. The lithium battery positive electrode sheet of claim 2, wherein a mass ratio of the second component to the positive electrode active material in the positive electrode material layer is denoted as w₂, wherein 0≤w₂<5%, and preferably 0≤w₂<3%; the particle size of the second component is within the range from 10nm to 10µm, preferably within the range from 50nm to 500nm.

6. The lithium battery positive electrode sheet of claim 1, wherein the positive electrode active material comprises at least one selected from the group consisting of a lithium cobaltate positive electrode and a modified material thereof, an NCM ternary positive electrode and a modified material thereof, an NCA ternary positive electrode and a modified material thereof, a lithium nickel manganate positive electrode and a modified material thereof, a lithium-rich positive electrode and a modified material thereof, and a lithium iron phosphate positive electrode and a modified material thereof.

7. A method for preparing the lithium battery positive electrode sheet of any one of claims 1-5, wherein the method compring:
Step 1: uniformly mixing the first component, or the mixed component of the first component and the second component, a positive electrode active material, a conductive additive, a binder, and a solvent to form a slurry;
Step 2: coating the slurry obtained in Step 1 on the surface of an aluminum current collector to form a positive electrode sheet;
Step 3: subjecting the positive electrode sheet obtained in Step 2 to a blast drying, and a vacuum drying to prepare the final positive electrode sheet.

8. A lithium battery cell, wherein the lithium battery cell comprises a positive electrode sheet, a negative electrode sheet, a separator, an electrolyte, and a shell, wherein the positive electrode sheet is the positive electrode sheet of any one of claims 1-5.
